# FASCICULE DE BREVET EUROPEEN

(11) **EP 2 655 056 B1**
(45) Date de publication et mention de la délivrance du brevet: **15.02.2017**
(21) Numéro de dépôt: 11817399.6
(22) Date de dépôt: 20.12.2011
(51) Int. Cl.: B32B 17/10, B64C 1/14

(54) **VITRAGE DE SECURITE**
SICHERHEITSVERGLASUNG
SAFETY GLAZING

(30) Priorité: 20.12.2010 FR 1060784
(43) Date de publication de la demande: 30.10.2013
(73) Titulaire: Saint-Gobain Glass France, 92400 Courbevoie (FR)
(72) Inventeur: ROUBY, Michel, F-45460 Bray En Val (FR); CHAUSSADE, Pierre, F-45100 Orleans (FR); DESCUSSE, Catherine, F-45110 Chateauneuf Sur Loire (FR)
(74) Mandataire: Saint-Gobain Recherche
(86) Numéro de dépôt international: PCT/FR2011/053062
(87) Numéro de publication internationale: WO 2012/085433

(56) Documents cités:
- FR-A1- 2 725 399
- FR-A1- 2 909 921
- US-A- 4 469 743
- US-A- 5 356 745
- US-A1- 2005 129 954
- US-A1- 2009 148 707

## Description

La présente invention est relative à un vitrage de sécurité pour lequel on recherche des propriétés de résistance à la pénétration, d'absorption d'énergie (telle que produite par un choc), et d'antilacération et antirayure de manière à garantir un maintien durable d'une haute qualité optique de transparence. En particulier, ce vitrage peut être utilisé pour un véhicule de transport, notamment aérien pouvant être soumis à des chocs inopinés tels que par oiseau.

On connaît du brevet EP 707 951 B1 un tel vitrage comprenant un substrat en verre et une feuille complexe en matière plastique comprenant une couche de polyvinylbutyral plastifié et un film de polyester pourvu d'un revêtement résistant à la rayure et à l'abrasion, dans lequel une couche adhésive de polyuréthane thermoplastique est intercalée entre le substrat en verre et la couche de polyvinylbutyral de la feuille complexe de matière plastique.

Les inventeurs se sont à présent aperçus que les fonctionnalités recherchées du vitrage définies ci-dessus sont susceptibles d'être améliorées pour une adhésion accrue du film de polyester à la couche de polyvinylbutyral.

A cet effet, l'invention a pour objet un vitrage comprenant un substrat en verre et une feuille complexe en matière plastique comprenant une couche de polyvinylbutyral plastifié et un film de polyester pourvu d'un revêtement résistant à la rayure et à l'abrasion, une couche adhésive de polyuréthane thermoplastique étant intercalée entre le substrat en verre et la couche de polyvinylbutyral de la feuille complexe de matière plastique, caractérisé en ce que l'adhésion du film de polyester à la couche de polyvinylbutyral, mesurée en exerçant sur une bande de 1 cm de large du film de polyester une traction perpendiculaire à la surface du vitrage avec une vitesse de traction de 5 cm/min, est au moins égale à 3 (de préférence 4 et de manière particulièrement préférée 5) daN/cm.

Cette valeur, plus élevée que dans les vitrages de ce type connus à l'heure actuelle, procure une meilleure résistance durable aux chocs subis dans les conditions d'utilisation visées, notamment aux chocs à l'oiseau. Elle est à mesurer dans toutes les conditions d'utilisation du vitrage, notamment de température, humidité, salinité, y compris tout au long de sa durée de vie.

La couche adhésive en polyuréthane permet de conserver une bonne adhésion de la feuille complexe par l'intermédiaire de sa couche de PVB avec le substrat en verre, dans des conditions de températures et d'humidité très variables.

La combinaison ainsi réalisée dans un vitrage de type « bilayer » d'une couche adhésive et d'absorbeur d'énergie en polyuréthane et d'une couche d'absorbeur d'énergie en PVB permet de conserver les bonnes propriétés d'antipénétration et/ou d'antiéclats du vitrage dans une très large plage de températures et surtout à basses températures, c'est-à-dire à des températures inférieures à 0 °C et même inférieures à -20 °C.

Le revêtement résistant à la rayure et à l'abrasion peut être un revêtement dur à base de polysiloxane ou similaire.

Conformément à l'invention, l'adhésion du film de polyester à la couche de polyvinylbutyral est mesurée à une vitesse de traction de 5 cm/min, il est cependant précisé que cette vitesse est comprise entre 2 et 5 cm/min, pouvant être égale à 2 cm/min sans que la valeur d'adhésion mesurée ne change quasiment.

Les inventeurs ont par ailleurs déterminé que l'adhésion du film de polyester à la couche de polyvinylbutyral est au plus égale à 8, de préférence 7 daN/cm, de manière à permettre un décollement progressif du film de polyester de la couche de polyvinylbutyral lors d'un choc à l'oiseau ou similaire. En cas d'adhésion plus importante, un choc à l'oiseau provoque la rupture du film de polyester (PET) : la feuille complexe de matière plastique se comporte alors comme un bloc monolithique, et commence à perdre sa propriété antiéclats.

Le substrat en verre peut être un substrat feuilleté ou un substrat monolithique. La ou les feuilles de verre peuvent être en verre recuit, ou en verre trempé thermique ou trempé chimique.

Diverses compositions de verre sont employées de préférence :
- un verre silicosodocalcique,
- un verre essentiellement exempt de CaO, tel que décrit dans la demande de brevet WO 98/46537,
- un verre présentant, sous forme d'une feuille de 3,2, respectivement 4 mm d'épaisseur, une transmission lumineuse T_{L} et/ou une transmission énergétique T_{E} d'au moins 90 % ; celui-ci est particulièrement avantageux pour la vision de nuit avec des lunettes de visée infrarouge à amplification.

Pour quantifier la transmission du verre dans le domaine du visible, on définit ainsi un facteur de transmission lumineuse, appelé transmission lumineuse, souvent abrégé « T_{L} », calculé entre 380 et 780 nm et ramené à une épaisseur de verre de 3,2 ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527. Pour quantifier la transmission du verre dans le domaine englobant le visible et l'infrarouge solaire (aussi appelé « proche infrarouge »), on définit un facteur de transmission énergétique, appelé « transmission énergétique », abrégé « T_{E} », calculé selon la norme ISO 9050 et ramené à une épaisseur de verre de 3,2 ou 4 mm. Selon la norme ISO 9050, la gamme de longueurs d'ondes utilisées pour le calcul va de 300 à 2500 nm.

Il est connu pour atteindre des valeurs de T_{L} et T_{E} supérieures à 90%, de diminuer au maximum la teneur totale en oxyde de fer dans le verre. L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique Fe³⁺) et surtout dans le domaine du visible et proche infrarouge (absorption due à l'ion ferreux Fe²⁺). Avec les matières premières naturelles ordinaires, la teneur pondérale totale en oxyde de fer est de l'ordre de 0,1% (1000 ppm). Des transmissions de plus de 90% exigent toutefois d'abaisser la teneur en oxyde de fer à moins de 0,02% ou 200 ppm, voire moins de 0,01% (100 ppm), ce qui impose de choisir des matières premières particulièrement pures et accroît le coût du produit final.

Pour augmenter plus encore la transmission du verre, il est également connu de diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul, le rédox étant défini comme étant le rapport entre la teneur pondérale en FeO (fer ferreux) et la teneur pondérale en oxyde de fer total (exprimé sous la forme Fe₂O₃). Ce nombre peut varier entre 0 et 0,9, des rédox nuls correspondant à un verre totalement oxydé.

Les verres comprenant des teneurs normales en oxyde de fer, de l'ordre de 1000 ppm ou plus, présentent naturellement des rédox de l'ordre de 0,25. En revanche, les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Ainsi l'une des compositions de verre préférées pour la mise en oeuvre de l'invention a une teneur en oxyde de fer d'au plus 150, ou mieux, 100 ppm et un rédox au plus égal à 0,3, de préférence 0,2.

Pour permettre une vision de nuit avec des lunettes de visée infrarouge à amplification dans les meilleures conditions, le vitrage de l'invention, en épaisseur de verre indicative de 3, respectivement 4 mm, muni d'une couche chauffante de type ITO (oxyde d'indium dopé à l'étain), du polyuréthane thermoplastique et de la feuille complexe en matière plastique Spallshield®, présente ainsi avantageusement des valeurs de T_{L} et/ou T_{E} au moins égales à 75, de préférence 80 voire 85 %.

Cependant l'emploi de verre moins clair, notamment teinté dans la masse, ou de verre revêtu d'une couche antisolaire telle qu'à l'argent entre également dans le cadre de l'invention.

En effet, dans le cas d'une application dans laquelle la vision nocturne n'est pas si importante il est également avantageux de profiter du substrat verrier pour la fonction antisolaire: soit en utilisant du verre teinté dans la masse, de type teinte fonctionnelle automobile qui permet d'abaisser la transmission lumineuse et énergétique, soit en utilisant des couches antisolaires à base d'argent. Dans certains cas, il est demandé au vitrage d'être chauffant, pour assurer le dégivrage et le désembuage en toutes circonstances. Le verre est alors muni d'une couche d'ITO, oxyde d'indium dopé à l'étain (INDIEX®, marque déposée par la société Saint-Gobain Glass France), entre deux amenées de courant en émail argent. Si le verre doit être à la fois antisolaire et chauffant, le verre peut être avantageusement revêtu d'une couche à base d'argent également mais chauffante. Enfin si il n'est pas possible d'utiliser un verre à couche, on peut également insérer dans la partie plastique du bilayer, entre les films thermoplastiques TPU et PVB, un film antisolaire de type PVB/PET à couche d'argent/PVB.

La couche de polyuréthane se présente avantageusement sous la forme d'un film de polyuréthane thermoplastique aliphatique, ou cycloaliphatique, ou aliphatique-aromatique. Son épaisseur est au moins égale à 0,1, de préférence 0,2 mm suffisante pour apporter les propriétés d'absorbeur d'énergie requises, et au plus égale à 6, de préférence 4,5 mm, valeurs au-dessus desquelles aucun avantage supplémentaire n'est obtenu. En particulier cette épaisseur est un multiple de 0,38 mm.

La couche en polyuréthane est généralement formée à partir d'un composant isocyanate choisi parmi les isocyanates aliphatiques, cycloaliphatiques, aliphatiques-aromatiques non sensibles à la lumière, et pouvant contenir des fonctions urées,ou encore des biurets d'isocyanate, et d'un composant polyol comprenant au moins un polyol long choisi parmi des polyétherpolyols ou des polyesterpolyols de masse moléculaire comprise entre 450 et 2000, des polycaprolactones de masse moléculaire comprise entre 500 et 2000, des polycarbonatepolyols et polyesterpolycarbonatepolyols de masse moléculaire comprise entre 1000 et 2000, des polybutadiènes à fonction hydroxyle ou carboxyle, associé le cas échéant à au moins un diol court de masse moléculaire comprise entre 50 et 200.

On peut utiliser en particulier en tant qu'isocyanate les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis (isocyanatométhyl)benzène, le bis-(4-isocyanatocyclohexyl)méthane, le bis-(3-méthyl-4- isocyanatocyclohexyl)méthane, le 2,2,-bis-(4-isocyanatocyclohexyl)propane et le 3-isocyanatométhyl-3,5-5-triméthylcyclohexylisocyanate, le p-phénylènediisocyanate et p-cyclohexyldiisocyanate.

On utilise par exemple en tant que polyols des polyols obtenus par réaction d'alcools polyfonctionnels avec des diacides aliphatiques ou des éthers cycliques. Les alcools polyfonctionnels sont par exemple le 1,2-éthanediol (éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (hydroxy-méthyl) 1-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propanediol (pentaérythritol), le 1,2,3,4,5,6-hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

Le composant polyol peut encore comprendre le cas échéant un agent réticulant de fonctionnalité supérieure à 2 tel un triol de masse moléculaire comprise entre 100 et 3000.

La feuille complexe est formée d'une couche de PVB plastifié associée à un film de polyester tel que du polyéthylène téréphtalate (PET) revêtu d'une couche dure de protection anti-rayure et anti-abrasion à base de polysiloxane ou d'une couche autocicatrisable à base d'un polyuréthane de préférence réticulé (thermodurcissable).

Un PVB plastifié convenable est par exemple commercialisé sous l'appellation SAFLEX® par la Société SOLUTIA ou encore commercialisé sous l'appellation BUTACITE® par la Société DU PONT DE NEMOURS. Son épaisseur est par exemple de 0,38 mm ou de 0,76 mm.

Le film de polyester présente une épaisseur généralement inférieure à 0,5 mm. Le revêtement dur en organopolysiloxane est compris généralement entre 0,5 et 50 µm.

La feuille complexe formée d'une couche de PVB et d'un film de polyester notamment de PET revêtu d'une couche anti-rayure et anti-abrasion peut être fabriquée au moment même de l'opération d'assemblage du vitrage, par empilage des éléments. Avantageusement, l'invention utilise une feuille complexe préfabriquée comprenant une couche de PVB de 0,38 ou 0,76 mm d'épaisseur et un film de polyéthylène téréphtalate d'environ 0,2 mm d'épaisseur enduit d'une couche de polysiloxane. Une telle feuille complexe est commercialisée par exemple sous l'appellation SPALLSHIELD® par la Société DU PONT DE NEMOURS.

L'invention a également pour objet l'application du vitrage décrit ci-dessus pour un véhicule de transport aérien, aquatique ou terrestre, pour le bâtiment, l'ameublement, l'aménagement intérieur, l'électroménager ou le mobilier urbain, et en particulier comme vitrage d'hélicoptère.

D'autres avantages et caractéristiques de l'invention apparaîtront dans la description de l'exemple suivant.

### EXEMPLE

Trois feuilles complexes de matière plastique, respectivement commercialisées par la SOCIETE DUPONT DE NEMOURS sous les marques enregistrées Spallshield® BE 1028 - 157, Spallshield® SG2 - 157 et Spallshield® SG2 - 307 sont employées : Par commodité, elles seront désignées ci-après 1028, SG2 - 157 et SG2 - 307.

1028 et SG2 - 157 sont constituées d'une feuille de 0,38 mm de PVB plastifié et d'une feuille de 0,18 mm de poly(téréphtalate d'éthylène) (PET) verni par une couche de polysiloxane.

SG2 - 307 en diffère par l'épaisseur de 0,76 mm de la feuille de PVB plastifié.

SG2 - 157 et SG2 - 307 sont totalement identiques dans la nature de leurs constituants. Par contre 1028 présente un PVB différent dans la nature et la teneur du plastifiant qu'il contient, et sa feuille de PET verni n'a pas été soumise, sur sa face destinée à adhérer au PVB plastifié, au même traitement d'adhésivation que celle des deux autres feuilles complexes, de sorte que l'adhésion de son film de PET à sa feuille de PVB plastifié n'excède jamais 2 daN/cm quelles que soient les conditions de mesure. Cette valeur est mesurée, ici et dans la suite, conformément à l'invention, par la méthode du test de pelage qui consiste à exercer sur une bande de 1 cm de large du film de PET une traction perpendiculaire à la surface du vitrage (et de la feuille de PVB plastifié) avec une vitesse de traction de 2 cm/min. 1028 représentant par conséquent l'état de la technique tel qu'exposé dans le brevet EP 707 951 B1, n'est donc pas conforme à l'invention.

Par contre SG2 - 157 et SG2 - 307 sont conformes à l'invention et présentent les valeurs identiques suivantes d'adhésion PET/PVB :
- 7,9 +/- 0,5 daN/cm à 20 °C ;
- 5,8 +/- 1,5 daN/cm (déchirement du PVB sur certaines éprouvettes) après 14 jours en chaleur humide : 50 °C et 95 % d'humidité relative ;
- 6,5 +/- 0,5 daN/cm (déchirement du PVB sur une éprouvette) après 500 h de vieillissement au rayonnement ultraviolet de type A -295 à 400 nm de longueur d'onde- à une température de 50 °C (QUV A).

On associe une feuille de verre flotté silicosodocalcique trempé chimiquement et de 3 mm d'épaisseur à chacune des trois feuilles complexes de matière plastique décrites précédemment,
- par l'intermédiaire d'une feuille de polyuréthane thermoplastique de 1,14 mm d'épaisseur pour 1028 et SG2 - 157, et 0,76 mm d'épaisseur pour SG2 - 307, dans une première série,
- par l'intermédiaire d'une feuille de polyuréthane thermoplastique de 4,18 mm d'épaisseur pour 1028 et SG2 - 157, et 3,8 mm d'épaisseur pour SG2 - 307, dans une deuxième série.

Dans chacune desdites première et deuxième séries, SG2 - 157 et SG2 - 307 résistent mieux aux chocs de type à l'oiseau que 1028, y compris dans la durée d'utilisation minimale garantie, et les conditions de vieillissement d'un vitrage d'hélicoptère, en particulier.

## Revendications

1. Vitrage comprenant un substrat en verre et une feuille complexe en matière plastique comprenant une couche de polyvinylbutyral plastifié et un film de polyester pourvu d'un revêtement résistant à la rayure et à l'abrasion, une couche adhésive de polyuréthane thermoplastique étant intercalée entre le substrat en verre et la couche de polyvinylbutyral de la feuille complexe de matière plastique, **caractérisé en ce que** l'adhésion du film de polyester à la couche de polyvinylbutyral, mesurée en exerçant sur une bande de 1 cm de large du film de polyester une traction perpendiculaire à la surface du vitrage avec une vitesse de traction de 5 cm/min, est au moins égale à 3 daN/cm et au plus égale à 8 daN/cm.

2. Vitrage selon la revendication 1, **caractérisé en ce que** l'adhésion du film de polyester à la couche de polyvinylbutyral est au moins égale à 4 daN/cm.

3. Vitrage selon l'une des revendications précédentes, **caractérisé en ce que** l'adhésion du film de polyester à la couche de polyvinylbutyral est au moins égale à 5 daN/cm.

4. Vitrage selon l'une des revendications précédentes, **caractérisé en ce que** l'adhésion du film de polyester à la couche de polyvinylbutyral est au plus égale à 7 daN/cm.

5. Vitrage selon l'une des revendications précédentes, **caractérisé en ce que** le substrat en verre est une feuille de verre recuit ou trempé.

6. Vitrage selon la revendication 5, **caractérisé en ce que** le verre est trempé chimiquement.

7. Vitrage selon la revendication 5, **caractérisé en ce que** le verre est choisi parmi un verre silicosodocalcique et un verre essentiellement exempt de CaO.

8. Vitrage selon la revendication 5, **caractérisé en ce que** le verre présente, sous forme d'une feuille de 3,2, respectivement 4 mm d'épaisseur, une transmission lumineuse T_{L} d'au moins 90 %.

9. Vitrage selon la revendication 5, **caractérisé en ce que** le verre présente, sous forme d'une feuille de 3,2, respectivement 4 mm d'épaisseur, une transmission énergétique T_{E} d'au moins 90 %.

10. Vitrage selon l'une des revendications précédentes, **caractérisé en ce que** la couche de polyuréthane thermoplastique a une épaisseur au moins égale à 0,1, de préférence 0,2 mm.

11. Vitrage selon l'une des revendications précédentes, **caractérisé en ce que** la couche de polyuréthane thermoplastique a une épaisseur au plus égale à 6, de préférence 4,5 mm.

12. Application d'un vitrage selon l'une des revendications précédentes pour un véhicule de transport aérien, aquatique ou terrestre, pour le bâtiment, l'ameublement, l'aménagement intérieur, l'électroménager ou le mobilier urbain.

13. Application d'un vitrage selon la revendication 12, comme vitrage d'hélicoptère.

## Patentansprüche

1. Verglasung, enthaltend ein Glassubstrat und eine komplexe Kunststoffscheibe, die eine Schicht aus plastifiziertem Polyvinylbutyral und eine Polyesterfolie, die mit einer kratz- und abriebfesten Beschichtung versehen ist, enthält, wobei eine Haftschicht aus thermoplastischem Polyurethan zwischen dem Glassubstrat und der Polyvinylbutyral-Schicht der komplexen Kunststoffscheibe eingebracht ist, **dadurch gekennzeichnet, dass** die Haftung der Polyesterfolie auf der Polyvinylbutyral-Schicht, die gemessen wird, indem auf einen Streifen der Polyesterfolie mit einer Breite von 1 cm eine Zugkraft senkrecht zu der Oberfläche der Verglasung mit einer Zuggeschwindigkeit von 5 cm/min. ausgeübt wird, mindestens gleich 3 daN/cm und höchstens gleich 8 daN/cm beträgt.

2. Verglasung nach Anspruch 1, **dadurch gekennzeichnet, dass** die Haftung der Polyesterfolie auf der Polyvinylbutyral-Schicht mindestens gleich 4 daN/cm beträgt.

3. Verglasung nach einem der vorhergehenden Ansprüche, **dadurch gekennzeichnet, dass** die Haftung der Polyesterfolie auf der Polyvinylbutyral-Schicht mindestens gleich 5 daN/cm beträgt.

4. Verglasung nach einem der vorhergehenden Ansprüche, **dadurch gekennzeichnet, dass** die Haftung der Polyesterfolie auf der Polyvinylbutyral-Schicht höchstens gleich 7 daN/cm beträgt.

5. Verglasung nach einem der vorhergehenden Ansprüche, **dadurch gekennzeichnet, dass** das Glassubstrat eine getemperte oder vorgespannte Glasscheibe ist.

6. Verglasung nach Anspruch 5, **dadurch gekennzeichnet, dass** das Glas chemisch vorgespannt ist.

7. Verglasung nach Anspruch 5, **dadurch gekennzeichnet, dass** das Glas ausgewählt ist aus einem Kalknatronsilikatglas und einem Glas, das im Wesentlichen CaO-frei ist.

8. Verglasung nach Anspruch 5, **dadurch gekennzeichnet, dass** das Glas in Form einer Scheibe mit einer Dicke von 3,2 bzw. 4 mm einen Lichttransmissionsgrad TL von mindestens 90 % aufweist.

9. Verglasung nach Anspruch 5, **dadurch gekennzeichnet, dass** das Glas in Form einer Scheibe mit einer Dicke von 3,2 bzw. 4 mm einen Strahlungstransmissionsgrad TE von mindestens 90 % aufweist.

10. Verglasung nach einem der vorhergehenden Ansprüche, **dadurch gekennzeichnet, dass** die Schicht aus thermoplastischem Polyurethan eine Dicke mindestens gleich 0,1, bevorzugt 0,2 mm, hat.

11. Verglasung nach einem der vorhergehenden Ansprüche, **dadurch gekennzeichnet, dass** die Schicht aus thermoplastischem Polyurethan eine Dicke mindestens gleich 6, bevorzugt 4,5 mm, hat.

12. Anwendung einer Verglasung nach einem der vorhergehenden Ansprüche für ein Fahrzeug für den Transport auf dem Landweg, dem Wasser oder in der Luft, für Gebäude, Inneneinrichtung, Haushaltsgeräte oder Stadtmöbel.

13. Anwendung einer Verglasung nach Anspruch 12 als Hubschrauberverglasung.

## Claims

1. A glazing comprising a glass substrate and a complex sheet made of a plastic comprising a plasticized polyvinyl butyral layer and a polyester film provided with a scratch-resistant and abrasion-resistant coating, an adhesive layer of thermoplastic polyurethane being inserted between the glass substrate and the polyvinyl butyral layer of the complex sheet of plastic, **characterized in that** the adhesion of the polyester film to the polyvinyl butyral layer, measured by exerting on a 1 cm wide strip of the polyester film a tensile force perpendicular to the surface of the glazing with a pull rate of 5 cm/min, is at least equal to 3 daN/cm and at most equal to 8 daN/cm.

2. The glazing as claimed in claim 1, **characterized in that** the adhesion of the polyester film to the polyvinyl butyral layer is at least equal to 4 daN/cm.

3. The glazing as claimed in either of the preceding claims, **characterized in that** the adhesion of the polyester film to the polyvinyl butyral layer is at least equal to 5 daN/cm.

4. The glazing as claimed in one of the preceding claims, **characterized in that** the adhesion of the polyester film to the polyvinyl butyral layer is at most equal to 7 daN/cm.

5. The glazing as claimed in one of the preceding claims, **characterized in that** the glass substrate is a sheet of annealed or tempered glass.

6. The glazing as claimed in claim 5, **characterized in that** the glass is chemically tempered.

7. The glazing as claimed in claim 5, **characterized in that** the glass is chosen from a soda-lime-silica glass and a glass that is essentially free of CaO.

8. The glazing as claimed in claim 5, **characterized in that** the glass has, in the form of a 3.2 mm thick, respectively 4 mm thick sheet, a light transmission T_{L} of at least 90%.

9. The glazing as claimed in claim 5, **characterized in that** the glass has, in the form of a 3.2 mm thick, respectively 4 mm thick sheet, an energy transmission T_{E} of at least 90%.

10. The glazing as claimed in one of the preceding claims, **characterized in that** the layer of thermoplastic polyurethane has a thickness at least equal to 0.1 mm, preferably 0.2 mm.

11. The glazing as claimed in one of the preceding claims, **characterized in that** the layer of thermoplastic polyurethane has a thickness at most equal to 6 mm, preferably 4.5 mm.

12. An application of a glazing as claimed in one of the preceding claims for an airborne, water-borne or terrestrial transport vehicle, for buildings, furniture, interior fittings, electrical goods or street furniture.

13. The application of a glazing as claimed in claim 12, as helicopter glazing.
